# EUROPEAN PATENT APPLICATION

(11) **EP 4 421 014 A1**
(43) Date of publication of application: **28.08.2024**
(21) Application number: 22913089.3
(22) Date of filing: 06.05.2022
(51) Int. Cl.: B66B 1/28

(54) **ELEVATOR CONTROLLER AND ELEVATOR**

(30) Priority: 30.12.2021 CN 202111680759
(71) Applicant: Suzhou Inovance Control Technology Co., Ltd., Suzhou, Jiangsu 215000 (CN); Suzhou Inovance Technology Co., Ltd., Suzhou, Jiangsu 215104 (CN)
(72) Inventor: BAI, Yinhe, Suzhou, Jiangsu 215000 (CN)
(74) Representative: Osterhoff, Utz
(86) International application number: PCT/CN2022/091193
(87) International publication number: WO 2023/123793

(57) **Abstract**

Disclosed are an elevator controller and an elevator. The elevator controller includes a safety control circuit (10), a safety brake circuit (SBC) and/or a safety torque off circuit (STO). An input end of the safety control circuit (10) is connected to an elevator safety loop. An output end of the safety control circuit (10) is connected to an input end of the safety brake circuit (SBC) and/or an input end of the safety torque off circuit (STO). The safety loop is powered by a high-voltage power supply, and the safety control circuit (10) is provided between the safety loop and a low-voltage motor control circuit (30) to provide the power signal or the control signal for the low-voltage motor control circuit (30) and to provide low-voltage power to the low-voltage motor based on the power signal or the control signal.

## Description

### CROSS-REFERENCE TO RELATED APPLICATIONS

The present application claims priority to Chinese Patent Application No. 202111680759.5, filed on December 30, 2021, the entire contents of which are incorporated herein by reference.

### TECHNICAL FIELD

The present application relates to the technical field of elevator controlling, and in particular to an elevator controller and an elevator.

### BACKGROUND

After decades of development in our country's elevator industry, elevators have become an indispensable part of people's lives and are also one of the important construction equipment indispensable in the urbanization construction of modern society. Currently, our country is the world's elevator manufacturing center and the largest elevator market with elevator production, ownership, and exports increasing year by year. With the increasing demand for elevator renewal and the installation of elevators in old buildings, as well as the rigid demand brought about by real estate construction, the elevator industry is expected to continue to grow in the future.

At present, cutting off the motor power and brake power supply is mainly achieved through a contactor, and the contactor is connected in series in the motor and brake power supply circuits. For the elevators without a machine room or household elevators, the contactor frequently operates to generate noise, which affects the passengers' experience of taking the elevator and even affects surrounding residents. At the same time, due to the contact arcing discharge when the contactor is disconnected, the contactor failure rate is high, resulting in trapping people. In order to solve the above problems, low-voltage electrode controllers such as STO cards and SBC cards can be used. However, because the low-voltage STO cards and SBC cards require low-voltage power supply and the contacts of the hall door lock adopt a multi-layer series connection, with many floors and long leads, the door lock contacts will age after long-term use, the impedance will become larger, and the circuit current will be smaller, resulting in a higher elevator failure rate.

The above content is only used to assist in understanding the technical solution of the present application, and does not represent an admission that the above content is prior art.

### SUMMARY

The present application mainly aims to provide an elevator controller and an elevator to solve the technical problem in the existing technology that when a low-voltage motor controller is used, the circuit current is small, resulting in a high elevator failure rate.

In order to solve the above-mentioned technical problems, the present application provides an elevator controller including a safety control circuit, a safety brake circuit and/or a safety torque off circuit,
an input end of the safety control circuit is connected to an elevator safety loop;
an output end of the safety control circuit is connected to an input end of the safety brake circuit and/or an input end of the safety torque off circuit; and
the safety control circuit is configured to convert a high-voltage electrical signal from an elevator safety loop into a power signal or a control signal required by the safety brake circuit and/or the safety torque off circuit.

In an embodiment, the safety control circuit includes a first rectifier circuit and a switch circuit,
the first rectifier circuit is connected to the elevator safety loop and the switch circuit, and the switch circuit is connected to a low-voltage power supply and the safety brake circuit or the safety torque off circuit respectively;
the first rectifier circuit is configured to rectify the high-voltage electrical signal to obtain a rectified electrical signal, and send the rectified electrical signal to the switch circuit; and
the switch circuit is configured to receive the rectified electrical signal and generate a control signal, and control a connection between the low-voltage power supply and the safety brake circuit and/or the safety torque off circuit according to the control signal.

In an embodiment, the first rectifier circuit includes a brake rectifier circuit and a lifting rectifier circuit, and the switch circuit includes a brake switch circuit and a lifting switch circuit;
the brake rectifier circuit is connected to the elevator safety loop and the brake switch circuit, and the brake switch circuit is connected to the low-voltage power supply and the safety brake circuit respectively;
the lifting rectifier circuit is connected to the elevator safety loop and the lifting switch circuit, and the lifting switch circuit is connected to the low-voltage power supply and the safety torque off circuit respectively;
the brake rectifier circuit is configured to rectify the high-voltage electrical signal to obtain a rectified brake electrical signal, and send the rectified brake electrical signal to the brake switch circuit;
the brake switch circuit is configured to receive the rectified brake electrical signal to generate a brake control signal to control the connection between the low-voltage power supply and the safety brake circuit according to the brake control signal;
the lifting rectifier circuit is configured to rectify the high-voltage electrical signal to obtain a rectified lifting electrical signal, and send the rectified lifting electrical signal to the lifting switch circuit; and
the lifting switch circuit is configured to receive the rectified lifting electrical signal and generate a lifting control signal to control the connection between the low-voltage power supply and the safety torque off circuit according to the lifting control signal.

In an embodiment, the high voltage conversion circuit includes a first resistor, a second resistor, a first diode, a second diode, a third diode, a fourth diode, a first optocoupler and a first transistor;
a first end of the first resistor is connected to the elevator safety loop, and a second end of the first resistor is connected to a first end of the first diode and a second end of the fourth diode respectively; a second end of the first diode is connected to a second end of the second diode and a first end of the first optocoupler; a first end of the second diode is connected to a second end of the third diode and a first end of the second resistor; a first end of the third diode is connected to a first end of the fourth diode and a second end of the first optocoupler respectively; a third end of the first optocoupler is connected to a collector of the first transistor and the low-voltage power supply; a fourth end of the first optocoupler is connected to a base of the first transistor; and an emitter of the first transistor is connected to an input end of the safety brake circuit and/or the safety torque off circuit.

In an embodiment, the high voltage conversion circuit includes a first resistor, a second resistor, a third resistor, a fourth resistor, a first diode, a second diode, a third diode, a fourth diode, a fifth diode, a sixth diode, a seventh diode, an eighth diode, a first optocoupler, a second optocoupler, a first transistor and a second transistor;
a first end of the first resistor is connected to the elevator safety loop, and a second end of the first resistor is respectively connected to a first end of the first diode and a second end of the fourth diode; a second end of the first diode is connected to a second end of the second diode and a first end of the first optocoupler; a first end of the second diode is connected to a second end of the first diode and a first end of the second resistor respectively; a first end of the third diode is connected to a first end of the fourth diode and a second end of the first optocoupler respectively; a third end of the first optocoupler is connected to a collector of the first transistor and the low-voltage power supply; a fourth end of the first optocoupler is connected to a base of the first transistor; an emitter of the first transistor is connected to a first input end of the safety brake circuit or the safety torque off circuit; a first end of the third resistor is connected to the elevator safety loop; a second end of the third resistor is connected to a first end of the fifth diode and a second end of the eighth diode respectively; a second end of the fifth diode is connected to a second end of the sixth diode and a first end of the second optocoupler; a first end of the sixth diode is connected to a second end of the seventh diode and a first end of the fourth resistor; a first end of the seventh diode is connected to a first end of the eighth diode and a second end of the second optocoupler respectively; a third end of the second optocoupler is connected to a collector of the second transistor and the low-voltage power supply; a fourth end of the second optocoupler is connected to a base of the second transistor; and an emitter of the second transistor is connected to a second input end of the safety brake circuit or the safety torque off circuit.

In an embodiment, the safety control circuit further includes a transformer circuit and a second rectifier circuit;
the transformer circuit is connected to the elevator safety loop and the second rectifier circuit, and the second rectifier circuit is connected to the safety brake circuit and/or the safety torque off circuit;
the transformer circuit is configured to convert the high-voltage electrical signal to obtain an electrical signal to be rectified, and send the electrical signal to be rectified to the second rectifier circuit; and
the second rectifier circuit is configured to rectify the electrical signal to be rectified to a low-voltage electrical signal, and send the low-voltage electrical signal to the safety brake circuit and/or the safety torque off circuit.

In an embodiment, the voltage transformer circuit includes a brake transformer circuit and a lifting transformer circuit, and the second rectifier circuit includes a brake rectifier circuit and a lifting rectifier circuit;
the lifting transformer circuit is connected to the elevator safety loop and the lifting rectifier circuit, the lifting rectifier circuit is connected to the safety torque off circuit, the brake transformer circuit is connected to the elevator safety loop and the brake rectifier circuit, and the brake rectifier circuit is connected to the safety brake circuit;
the lifting transformer circuit is configured to convert the high-voltage electrical signal to obtain a lifting electrical signal to be rectified, and send the lifting electrical signal to be rectified to the lifting rectifier circuit;
the lifting rectifier circuit is configured to rectify the lifting electrical signal to be rectified to obtain a low-voltage lifting electrical signal, and send the low-voltage lifting electrical signal to the safety torque off circuit;
the brake transformer circuit is configured to convert the high-voltage electrical signal to obtain a brake electrical signal to be rectified, and send the brake electrical signal to be rectified to the brake rectifier circuit; and
the brake rectifier circuit is configured to rectify the brake electrical signal to be rectified to obtain a low-voltage brake electrical signal, and send the low-voltage brake electrical signal to the safety brake circuit.

In an embodiment, the transformer circuit includes a first transformer, and the second rectifier circuit includes a ninth diode; and
a first end of the first transformer is connected to the elevator safety loop, a third end of the first transformer is connected to a first end of the ninth diode, a second end of the ninth diode is connected to a first input end and a second input end of the safety brake circuit and/or the safety torque off circuit, a second end of the first transformer is connected to an equipotential point, and a fourth end of the first transformer is connected to ground.

In an embodiment, the transformer circuit includes a first transformer and a second transformer, and the second rectifier circuit includes a ninth diode and a tenth diode;
a first end of the first transformer is connected to the elevator safety loop, a third end of the first transformer is connected to a first end of the ninth diode, a second end of the ninth diode is connected to a first input end of the safety brake circuit and/or the safety torque off circuit, a second end of the first transformer is connected to an equipotential point, and a fourth end of the first transformer is connected to ground; and
a first end of the second transformer is connected to the elevator safety loop, a third end of the second transformer is connected to a first end of the tenth diode, a second end of the tenth diode is connected to a second input end of the safety brake circuit and/or the safety torque off circuit, a second end of the second transformer is connected to the equipotential point, and a fourth end of the second transformer is connected to ground.

In order to solve the above-mentioned objective, the present application further provides an elevator including an elevator safety loop and the above-mentioned elevator controller. The elevator safety loop includes a plurality of switches, an input end of the elevator safety loop is connected to the high-voltage electrical signal, and an output end of the elevator safety loop is connected to the input end of the safety control circuit

The present application provides an elevator controller and an elevator. The elevator controller includes a safety control circuit, a safety brake circuit and/or the safety torque off circuit. The input end of the safety control circuit is connected to the elevator safety loop. The output end of the safety control circuit is connected to the input end of the safety brake circuit and/or the safety torque off circuit. In the present application, a high-voltage power supply is used to power the elevator safety loop. A safety control circuit is provided between the elevator safety loop and the low-voltage motor control circuit to provide the power signal or the control signal for the low-voltage motor control circuit, and to provide a low-voltage power to the low-voltage motor based on the power signal or the control signal, thereby effectively solving the problem of high elevator failure rate when using the low-voltage motor control circuit.

### BRIEF DESCRIPTION OF THE DRAWINGS

In order to more clearly illustrate the technical solutions in some embodiments of the present application or in the related art, a brief introduction will be given to the accompanying drawings required in the description of the embodiments or the related art. Obviously, the accompanying drawings in the following description are only some embodiments of the present application. For those skilled in the art, other accompanying drawings can be obtained based on the structures shown in these drawings without any creative effort. Other drawings obtained also belong to the protection scope of the present application.
FIG. 1 is a schematic structural view of an elevator controller according to a first embodiment of the present application.
FIG. 2 is a schematic structural view of an elevator controller according to a second embodiment of the present application.
FIG. 3 is a first circuit structure diagram of the elevator controller according to the second embodiment of the present application.
FIG. 4 is a second circuit structure diagram of the elevator controller according to the second embodiment of the present application.
FIG. 5 is a third circuit structure diagram of the elevator controller according to the second embodiment of the present application.
FIG. 6 is a fourth circuit structure diagram of the elevator controller according to the second embodiment of the present application.
FIG. 7 is a schematic structural view of an elevator controller according to a third embodiment of the present application.
FIG. 8 is a first circuit structure diagram of the elevator controller according to the third embodiment of the present application.
FIG. 9 is a second circuit structure diagram of the elevator controller according to the third embodiment of the present application.
FIG. 10 is a third circuit structure diagram of the elevator controller according to the third embodiment of the present application.
FIG. 11 is a fourth circuit structure diagram of the elevator controller according to the third embodiment of the present application.

### Description of reference signs:

| reference sign | name | reference sign | name |
|---|---|---|---|
| 10 | safety control circuit | AC | high-voltage power supply |
| SBC | safety brake circuit | DC | low-voltage power supply |
| STO | safety torque off circuit | D1 to D10 | first diode to tenth diode |
| 1011 | brake rectifier circuit | OC1 to OC2 | first optocoupler to second optocoupler |
| 1012 | lifting rectifier circuit | ST01 to STO2 | first input end to second input end of STO |
| 1021 | brake switch circuit | SBC1 to SBC2 | first input end to second input end of SBC |
| 1022 | lifting switch circuit | S1 | control cabinet emergency stop relay |
| 1031 | brake transformer circuit | S2 | hall door lock relay |
| 1032 | lifting transformer circuit | S3 | main board relay |
| 1041 | brake rectifier circuit | N | equipotential point |
| 1042 | lifting rectifier circuit | GND | ground |

The implementation of the purpose, functional characteristics and advantages of the present application will be further described with reference to the attached drawings and in combination with embodiments.

### DETAILED DESCRIPTION OF THE EMBODIMENTS

It should be understood that the specific embodiments described here are only used to explain the present application and are not used to limit the present application.

The technical solutions of embodiments of the present application will be clearly and completely described with reference to the drawings in the embodiments of the present application. Obviously, the described embodiments are only some rather than all of the embodiments of the present application. Based on the embodiments of the present application, all other embodiments obtained by those skilled in the art without creative efforts shall fall within the scope of the present application.

It should be noted that if there are directional indications (such as up, down, left, right, front, rear, etc.) in the present application, the directional indications are only used to explain the relative positional relationship, movement situation, etc. among components in a specific attitude (as shown in the drawings). If the specific attitude changes, the directional indication also changes accordingly.

In addition, the descriptions related to "first", "second" and the like in the present application are merely for descriptive purposes, and should not be understood as indicating or implying their relative importance or implicitly indicating the number of technical features indicated. Therefore, the features defined by "first" and "second" may explicitly or implicitly include at least one such feature. Besides, the technical solutions among various embodiments can be combined with each other, but the combination must be based on what can be achieved by those skilled in the art. When the combination of technical solutions is contradictory or cannot be achieved, it should be considered that such combination does not exist, and is not within the scope of the present application.

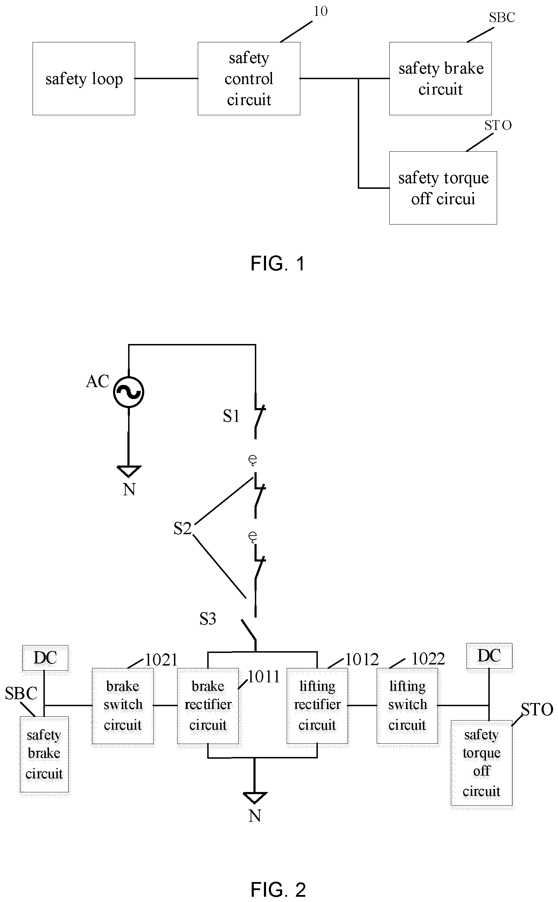

As shown in FIG. 1, FIG. 1 is a schematic structural view of an elevator controller according to a first embodiment of the present application. Based on FIG. 1, the present application provides a first embodiment of the elevator controller.

In this embodiment, the elevator controller includes a safety control circuit 10, a safety brake circuit SBC and/or a safety torque off circuit STO.

An input end of the safety control circuit 10 is connected to an elevator safety loop.

An output end of the safety control circuit 10 is connected to an input end of the safety brake circuit SBC and/or an input end of the safety torque off circuit STO.

It should be noted that the elevator safety loop is all safety switches connected in series to control a safety relay and each safety switch is installed in each safety component of the elevator. Only when all safety switches are turned on and the safety relay is closed can the elevator be powered to run. When there is a fault in the corresponding part of any safety switch in the elevator safety loop, the safety switch will not close and the elevator will not be able to operate. The safety control circuit 10 is a card provided to convert and rectify the voltage signal. In this embodiment, since the high-voltage power supply can provide high-voltage electrical signals for the elevator safety loop, and the low-voltage motor control circuit 30 needs to operate normally under low-voltage conditions, the safety control circuit 10 is a circuit that converts high-voltage electrical signals into control signals. The safety control circuit 10 may be configured to control the elevator motor.

In a specific embodiment, the elevator safety loop may send a high-voltage electrical signal provided by the high-voltage power supply AC to the safety control circuit 10. The safety control circuit 10 is configured to convert a high-voltage electrical signal into a power signal or a control signal required by the safety brake circuit and/or the safety torque off circuit. The power signal can directly provide voltage power for the low-voltage motor, and the control signal can control the conduction between the low-voltage power supply and the low-voltage motor, thereby controlling the low-voltage power supply to supply power to the low-voltage motor.

The high-voltage electrical signal is an electrical signal provided by a high-voltage power supply. After the safety loop is used for a long time, the impedance of the components will increase as the components change. By providing high-voltage electrical signals to the safety loop, even if the impedance of the components increases, it will not lead to an increase in faults. The control signal is a signal used to control the connection between the low-voltage power supply and the low-voltage motor. The connection or disconnection between the low-voltage power supply and the low-voltage motor can be controlled according to the specific form of the control signal.

In this embodiment, the present application provides an elevator controller. The elevator controller includes a safety control circuit 10, a safety brake circuit SBC and/or the safety torque off circuit STO. The input end of the safety control circuit is connected to the elevator safety loop. The output end of the safety control circuit is connected to the input end of the safety brake circuit and/or the safety torque off circuit. In the present application, a high-voltage power supply is used to power the elevator safety loop. A safety control circuit is provided between the elevator safety loop and the low-voltage motor control circuit to provide the power signal or the control signal for the low-voltage motor control circuit, and to provide a low-voltage power to the low-voltage motor based on the power signal or the control signal, thereby effectively solving the problem of high elevator failure rate when using the low-voltage motor control circuit.

As shown in FIG. 2, FIG. 2 is a schematic structural view of an elevator controller according to a second embodiment of the present application. Based on the elevator controller provided in the first embodiment, the present application provides a second embodiment of the elevator controller.

In this embodiment, the safety control circuit 10 includes a first rectifier circuit and a switch circuit.

The first rectifier circuit is connected to the elevator safety loop and the switch circuit, and the switch circuit is connected to a low-voltage power supply and the safety brake circuit or the safety torque off circuit respectively.

It should be noted that the safety torque off circuit STO is a circuit provided to control the normal lifting operation of the elevator motor. The safety torque off circuit STO can replace the running contactor and star-sealing contactor commonly used in the original elevator control circuit. The running contactor is a contactor that can control the long-term operation of the elevator equipment. The star-sealing contactor is a contactor that short-circuits the three windings of the synchronous traction machine to prevent the elevator from running out of control due to excessive speed when the brake is released. The safety torque off circuit STO is integrated with components with the same functions as the running contactor and the star-sealing contactor. The safety brake circuit SBC is a circuit provided to control the elevator motor to hold or release the brake. The safety brake circuit SBC can replace the brake contactor commonly used in the original elevator control circuit. The brake contactor is the contactor of the electromechanical device for preventing the elevator from moving when the elevator car is at rest and the motor is in a power-off state. In some control forms, it will brake the elevator when the elevator motor is powered off to prevent safety accidents.

It should be understood that the first rectifier circuit is configured to rectify the high-voltage electrical signal to obtain a rectified electrical signal. Rectification is the process of converting an alternating current signal into a direct current signal. The switch circuit 102 is a circuit configured to control conduction or disconduction of the circuit between the low-voltage power supply and the safety brake circuit SBC or the safety torque off circuit STO. The rectified electrical signal is a direct current signal, and the high-voltage electrical signal provided by the high-voltage power supply AC is an alternating current signal.

In a specific embodiment, the first rectifier circuit may rectify the high-voltage electrical signal to obtain a rectified electrical signal, and send the rectified electrical signal to the switch circuit 102. The switch circuit 102 is configured to receive the rectified electrical signal and generate a control signal, and control a connection between the low-voltage power supply DC and the safety brake circuit SBC and/or the safety torque off circuit STO according to the control signal.

It should be understood that in this embodiment, the safety brake circuit SBC or the safety torque off circuit STO includes one input end or a plurality of input ends. When a low-voltage power is provided to one input end, the high-voltage conversion circuit may only include a rectifier circuit and a switch circuit. In this embodiment, the low-voltage power may be provided for the two input ends of the safety brake circuit SBC or the safety torque off circuit STO. In this case, two rectifier circuits and two switch circuits need to be provided.

In this embodiment, the first rectifier circuit comprises a brake rectifier circuit 1011 and a lifting rectifier circuit 1012, and the switch circuit comprises a brake switch circuit 1021 and a lifting switch circuit 1022.

The brake rectifier circuit 1011 is connected to the elevator safety loop and the brake switch circuit 1021, and the brake switch circuit 1021 is connected to the low-voltage power supply DC and the safety brake circuit SBC respectively.

The lifting rectifier circuit 1012 is connected to the elevator safety loop and the lifting switch circuit 1022, and the lifting switch circuit 1022 is connected to the low-voltage power supply DC and the safety torque off circuit STO respectively.

It should be understood that the brake rectifier circuit 1011 and the brake switch circuit 1021 are configured to provide lifting control signals for the safety brake circuit SBC that controls the normal lifting operation of the elevator motor. The lifting control signal can control the connection between the low-voltage power supply DC and the safety brake circuit SBC, thereby providing the required low-voltage power supply for the safety brake circuit SBC. The lifting rectifier circuit 1012 and the lifting switch circuit 1022 are configured to provide brake control signals for the safety torque off circuit STO that controls the elevator motor to perform brake operation. The brake control signal can control the connection between the low-voltage power supply DC and the safety torque off circuit STO, thereby providing the required low-voltage power supply for the safety torque off circuit STO.

The brake rectifier circuit 1011 is connected to the elevator safety loop and the brake switch circuit 1021, and the brake switch circuit 1021 is connected to the low-voltage power supply DC and the safety brake circuit SBC respectively.

It should be noted that the holding brake refers to the control process of the elevator system to prevent the elevator from moving again when the elevator car stops and the motor is in a power-off state. The brake rectifier circuit 1011 is configured to rectify a high-voltage electrical signal to obtain a rectified brake electrical signal. The rectifier brake electrical signal is a direct current high-voltage electrical signal obtained after rectification.

In a specific embodiment, the brake rectifier circuit 1011 is configured to rectify the high-voltage electrical signal to obtain a rectified brake electrical signal, and send the rectified brake electrical signal to the brake switch circuit 1021. The brake switch circuit 1021 is configured to receive the rectified brake electrical signal to generate a brake control signal to control the connection between the low-voltage power supply and the safety brake circuit SBC according to the brake control signal.

The rectified brake electrical signal is a rectified electrical signal for controlling the operation of the elevator brake. The rectified brake electrical signal is a direct current signal. The brake control signal is an electrical signal for controlling the connection between the low-voltage power supply DC and the safety brake circuit SBC.

In a specific embodiment, the brake rectifier circuit 1011 rectifies the high-voltage electrical signal to obtain a rectified brake electrical signal, and sends the rectified brake electrical signal to the brake switch circuit. The brake switch circuit 1021 generates a brake control signal after receiving the rectified brake electrical signal, and controls the connection between the low-voltage power supply and the safety brake circuit according to the brake control signal.

The lifting rectifier circuit 1012 is configured to rectify the high-voltage electrical signal to obtain a rectified lifting electrical signal, and send the rectified lifting electrical signal to the lifting switch circuit 1022. The lifting switch circuit 1022 is configured to receive the rectified lifting electrical signal and generate a lifting control signal to control the connection between the low-voltage power supply and the safety torque off circuit STO according to the lifting control signal.

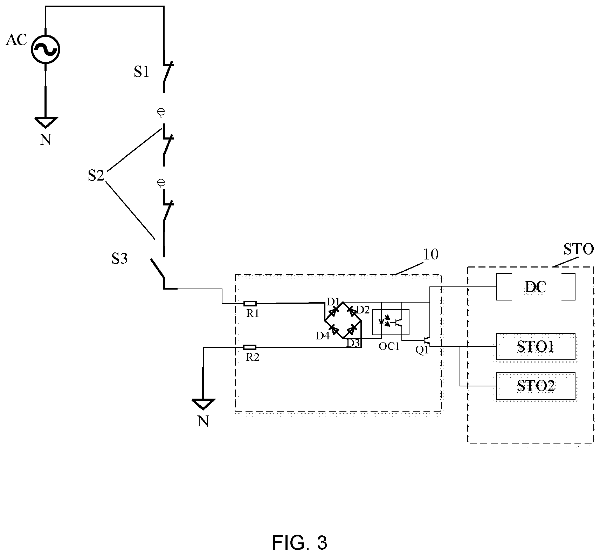

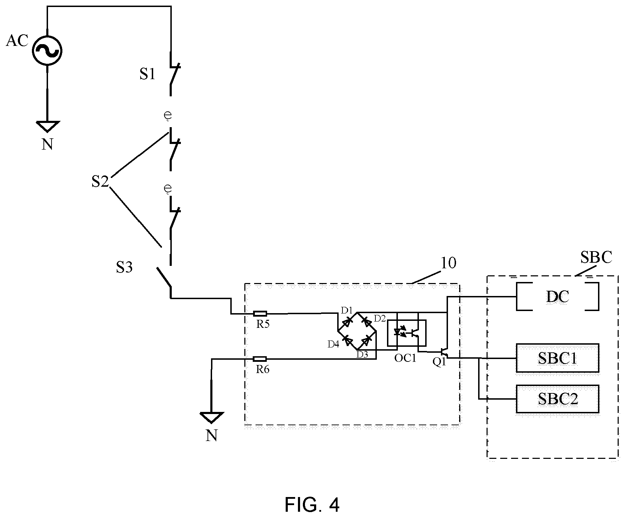

As shown in FIG. 3 and FIG. 4, in this embodiment, when the inputs in the safety brake circuit SBC or safety torque off circuit STO are supplied with a low-voltage power via a conversion circuit alone, the high voltage conversion circuit includes a first resistor, a second resistor, a first diode, a second diode, a third diode, a fourth diode, a first optocoupler OC1 and a first transistor Q1. A first end of the first resistor R1 is connected to the elevator safety loop; a second end of the first resistor R1 is connected to a first end of the first diode D1 and a second end of the fourth diode D4 respectively; a second end of the first diode D1 is connected to a second end of the second diode D2 and a first end of the first optocoupler OC1; a first end of the second diode D2 is connected to a second end of the third diode D3 and a first end of the second resistor R2; a first end of the third diode D3 is connected to a first end of the fourth diode D4 and a second end of the first optocoupler OC1 respectively; a third end of the first optocoupler OC1 is connected to a collector of the first transistor D1 and the low-voltage power supply; a fourth end of the first optocoupler OC1 is connected to a base of the first transistor D1; and an emitter of the first transistor D1 is connected to an input end of the safety brake circuit SBC and/or the safety torque off circuit STO.

It should be noted that the first diode to the fourth diode form a rectifier bridge to rectify the high-voltage electrical signal. During the specific rectification process, the forward voltage of the high-voltage electrical signal flows into the first optocoupler OC1 through the first diode D1 and the first end of the first optocoupler OC1, and then flows from the second end of the first optocoupler OC1 to the equipotential point N through the third diode D3 and the second resistor R2. The negative voltage of the high-voltage electrical signal flows into the first optocoupler OC1 through the fourth diode D4 and the second end of the first optocoupler OC1, and then flows from the first end of the first optocoupler OC1 to the equipotential point N through the second diode D2 and the second resistor R2. The input of the high-voltage electrical signal can continuously control the conduction between the third end and the fourth end of the first optocoupler OC1, and the low-voltage power supply DC can pass through the third end and the fourth end of the first optocoupler OC1 to provide a high-level signal for the base of the first transistor Q1, thereby turning on the first transistor Q1. At this time, the low-voltage power supply DC can provide the supply voltage to the input end of the safety brake circuit SBC or the safety torque off circuit STO through the first transistor Q1.

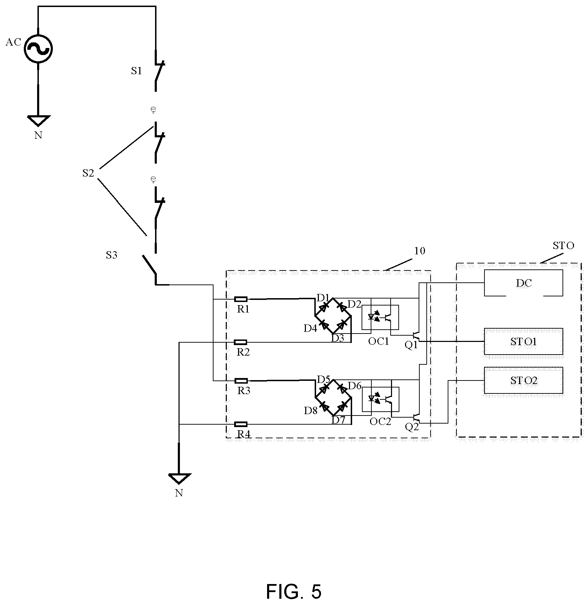

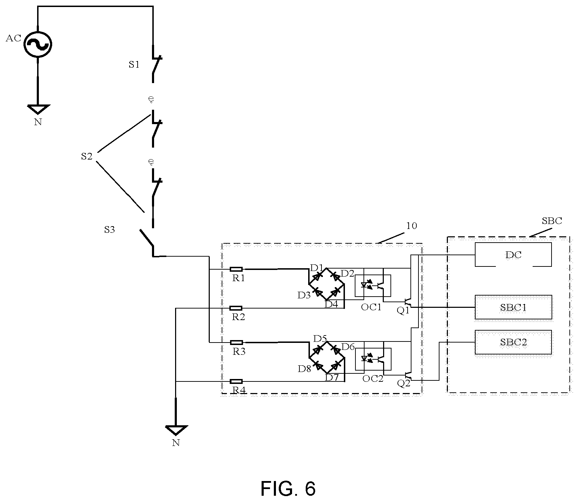

As shown in FIG. 5 and FIG. 6, in this embodiment, when the low-voltage power is provided for the two input ends of the safety brake circuit SBC or the safety torque off circuit STO through two conversion circuits, the high voltage conversion circuit includes a first resistor, a second resistor, a third resistor, a fourth resistor, a first diode, a second diode, a third diode, a fourth diode, a fifth diode, a sixth diode, a seventh diode, an eighth diode, a first optocoupler, a second optocoupler, a first transistor and a second transistor.

A first end of the first resistor R1 is connected to the elevator safety loop, and a second end of the first resistor R1 is respectively connected to a first end of the first diode D1 and a second end of the fourth diode D4; a second end of the first diode D1 is connected to a second end of the second diode D2 and a first end of the first optocoupler OC1; a first end of the second diode D2 is connected to a second end of the first diode D1 and a first end of the second resistor R2 respectively; a first end of the third diode D3 is connected to a first end of the fourth diode D4 and a second end of the first optocoupler OC1 respectively; a third end of the first optocoupler OC1 is connected to a collector of the first transistor D1 and the low-voltage power supply DC; a fourth end of the first optocoupler OC1 is connected to a base of the first transistor D1; an emitter of the first transistor D1 is connected to a first input end of the safety brake circuit SBC or the safety torque off circuit STO; a first end of the third resistor R3 is connected to the elevator safety loop; a second end of the third resistor R3 is connected to a first end of the fifth diode D5 and a second end of the eighth diode D8 respectively; a second end of the fifth diode D5 is connected to a second end of the sixth diode D6 and a first end of the second optocoupler OC2; a first end of the sixth diode D6 is connected to a second end of the seventh diode D7 and a first end of the fourth resistor R4; a first end of the seventh diode D7 is connected to a first end of the eighth diode D8 and a second end of the second optocoupler OC2 respectively; a third end of the second optocoupler OC2 is connected to a collector of the second transistor Q2 and the low-voltage power supply DC; a fourth end of the second optocoupler OC1 is connected to a base of the second transistor Q2; and an emitter of the second transistor D2 is connected to a second input end of the safety brake circuit SBC or the safety torque off circuit STO.

It should be noted that in this embodiment, the safety brake circuit SBC or the safety torque off circuit STO may also include two input ends: a first input end and a second input end. The two input ends can be input with the same low-voltage electrical signal. An extra set of the same first rectifier circuit 101 and the switch circuit 102 can be provided in the position where the low-voltage electrical signal is provided, such that the circuit can still work normally when one set is failure, thereby reducing the probability of system or equipment failure and improving system reliability. When the first input end and the second input end of the safety brake circuit SBC or the safety torque off circuit STO need to be input with the same voltage, two same sets of the first rectifier circuit 101 and the switch circuit 102 controls the low-voltage power supply DC to input respectively.

In a specific embodiment, after the high-voltage electrical signal is rectified by the rectifier bridge composed of the first diode to fourth diode, the third input end and the fourth input end of the first optocoupler OC1 are conductive, thereby providing the high-voltage signal to the base of the first transistor Q1 to turn on the first transistor Q1. The low-voltage power supply DC supplies the low-level power supply voltage to the safety brake circuit SBC or the first input end STO1 of the safety torque off circuit STO through the first transistor Q1. In this way, the safety brake circuit SBC or the safety torque off circuit STO can operate normally. After the same high-voltage electrical signal is rectified by the rectifier bridge composed of the fifth diode to eighth diode, the third input end and the fourth input end of the second optocoupler OC2 are conducted, thereby providing the high-level signal to the base of the second transistor Q2 to turn on the second transistor Q2. The low-voltage power supply DC provides the low-level power supply voltage to the safety brake circuit SBC or the second input end of the safety torque off circuit STO through the second transistor Q2, so that the safety brake circuit SBC or the safety torque off circuit STO operates normally.

In this embodiment, the safety control circuit includes a rectifier circuit and a switch circuit. When there is an external low-voltage power supply, the low-voltage power supply is controlled by the rectifier circuit and the switch circuit to provide a low-voltage signal for the safety brake circuit or the safety torque off circuit, thereby controlling the low-voltage motor to drive normally and solving the problem of high elevator failure rate when using a low-voltage motor control circuit.

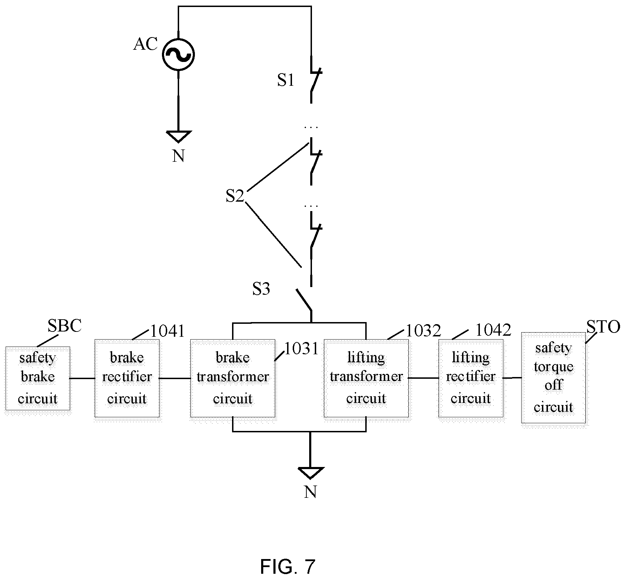

As shown in FIG. 7, FIG. 7 is a schematic structural view of an elevator controller according to a third embodiment of the present application. Based on the elevator controller provided in the above first embodiment, the present application provides a third embodiment of the elevator controller.

In this embodiment, the safety control circuit 10 further comprises a transformer circuit and a second rectifier circuit.

The transformer circuit is connected to the elevator safety loop and the second rectifier circuit, and the second rectifier circuit is connected to the safety brake circuit SBC and/or the safety torque off circuit STO.

The transformer circuit is configured to convert a high power supply voltage provided by a high-voltage power supply into a low power supply voltage required by a low-voltage drive motor. The voltage transformer circuit can be a transformer or a voltage-reducing resistor. The second rectifier circuit is configured to convert an alternating current low power supply voltage into a DC low power supply voltage.

In a specific embodiment, the transformer circuit is configured to convert the high-voltage electrical signal to obtain an electrical signal to be rectified, and send the electrical signal to be rectified to the second rectifier circuit. The second rectifier circuit is configured to rectify the electrical signal to be rectified to a low-voltage electrical signal, and send the low-voltage electrical signal to the safety brake circuit SBC and/or the safety torque off circuit STO, thereby driving the low-voltage motor.

In this embodiment, the voltage transformer circuit includes a brake transformer circuit 1031 and a lifting transformer circuit 1032, and the second rectifier circuit comprises a brake rectifier circuit 1041 and a lifting rectifier circuit 1042.

The lifting transformer circuit 1032 is connected to the elevator safety loop and the lifting rectifier circuit 1042, the lifting rectifier circuit 1042 is connected to the safety torque off circuit STO, the brake transformer circuit 1031 is connected to the elevator safety loop and the brake rectifier circuit 1041, and the brake rectifier circuit 1041 is connected to the safety brake circuit SBC.

It should be noted that the lifting transformer circuit 1032 is configured to convert a high-voltage electrical signal into a lifting electrical signal to be rectified corresponding to a voltage required by the safety torque off circuit STO. In this embodiment, the lifting transformer circuit 1032 can convert the high-voltage signal into a low-voltage lifting electrical signal to be rectified. The lifting rectifier circuit 1042 is configured to rectify the lifting electrical signal to be rectified obtained after voltage conversion. The direct current low-voltage lifting electrical signal obtained after rectification can provide a low-voltage power signal for the safety torque off circuit STO, thereby driving the safety torque off circuit STO to operate normally. The lifting electrical signal to be rectified is an alternating current low-voltage lifting electrical signal, and the low-voltage lifting electrical signal obtained after rectification is a direct current signal.

Similarly, the brake transformer circuit 1031 is configured to convert a high-voltage electrical signal into a brake electrical signal to be rectified corresponding to a voltage required by the safety brake circuit SBC. The brake electrical signal to be rectified is an alternating current signal whose voltage meets the requirements of the safety brake circuit SBC. After rectification, the low-voltage brake electrical signal can be obtained. In this embodiment, the brake transformer circuit 1031 can convert the high-voltage signal into a low-voltage brake electrical signal to be rectified. The brake rectifier circuit 1041 is configured to rectify the brake electrical signal to be rectified obtained after voltage conversion. The direct current low-voltage brake electrical signal obtained after rectification can provide a low-voltage power signal for the safety brake circuit SBC, thereby driving the safety brake circuit SBC to operate normally. Similarly, the brake electrical signal to be rectified is an alternating current low-voltage brake electrical signal, and the low-voltage brake electrical signal obtained after rectification is a direct current electrical signal.

In a specific embodiment, the lifting transformer circuit 1032 can perform voltage conversion on the high-voltage electrical signal to obtain a lifting electrical signal to be rectified, and send the lifting electrical signal to be rectified to the lifting rectifier circuit 1042. The lifting rectifier circuit 1042 can rectify the lifting electrical signal to be rectified to obtain a low-voltage lifting electrical signal, and send the low-voltage lifting electrical signal to the safety torque off circuit STO. The brake transformer circuit 1031 can convert the high-voltage electrical signal to obtain a brake electrical signal to be rectified, and send the brake electrical signal to be rectified to the brake rectifier circuit 1041. The brake rectifier circuit 1041 can convert the brake electrical signal to be rectified to obtain a low-voltage brake electrical signal, and send the low-voltage brake electrical signal to the safety brake circuit SBC.

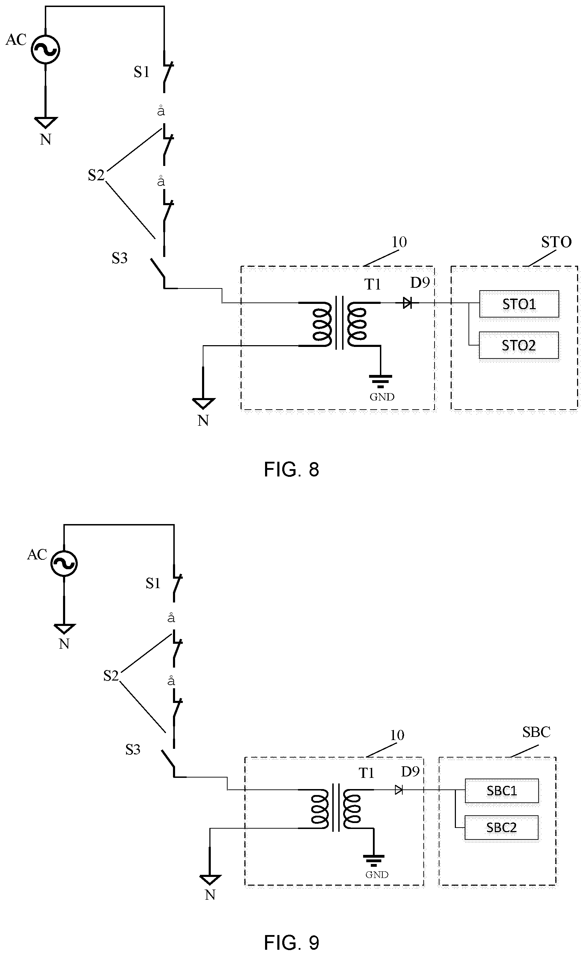

As shown in FIG. 8 and FIG. 9, in this embodiment, a set of transformers and diodes can be used to simultaneously supply power to the two input ends of the safety brake circuit SBC or the safety torque off circuit STO. The transformer circuit 103 includes a first transformer T1, and the second rectifier circuit includes a ninth diode D9.

A first end of the first transformer T1 is connected to the elevator safety loop, a third end of the first transformer T1 is connected to a first end of the ninth diode D9, a second end of the ninth diode D9 is connected to a first input end and a second input end of the safety brake circuit SBC and/or the safety torque off circuit STO, a second end of the first transformer T1 is connected to an equipotential point N, and a fourth end of the first transformer is connected to ground GND.

It should be noted that the ninth diode D9 is a rectifier diode. In this embodiment, the first end of the first transformer T1 can be connected to the elevator safety loop to receive a high-voltage electrical signal. After being converted by the coil in the first transformer T1, a lifting electrical signal to be rectified is obtained, and the lifting electrical signal to be rectified is output from the third output end of the first transformer T1 to the ninth diode D9. Due to the unidirectional conductivity of the diode, the ninth diode D9 can rectify the lifting electrical signal to be rectified to obtain a direct current low-voltage lifting electrical signal which is output to the first input end and the second input end of the safety brake circuit SBC or the safety torque off circuit STO through the second end of the ninth diode D1. The second end and the fourth end of the first transformer T1 is connected to the equipotential point N, thereby forming a complete circuit with the corresponding first end and third end respectively.

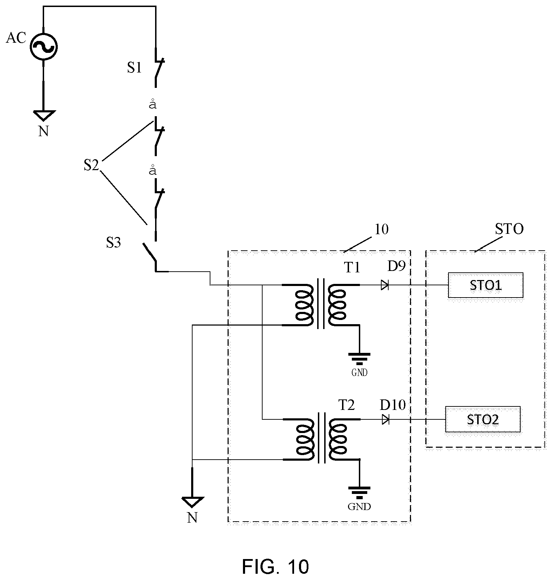

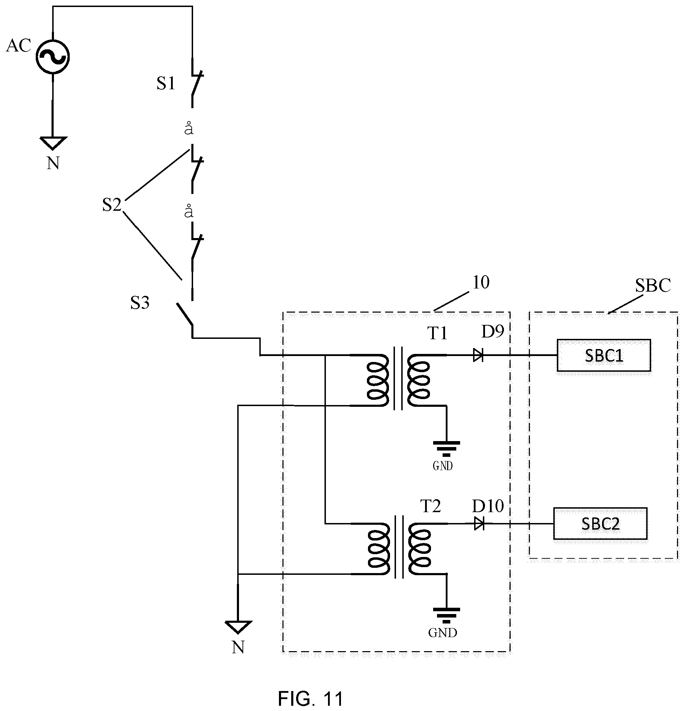

As shown in FIG. 10 and FIG. 11, in this embodiment, two sets of transformers and diodes can also be used to supply power to the first input end and the second input end of the safety brake circuit SBC or the safety torque off circuit STO respectively. The transformer circuit 103 includes a first transformer and a second transformer, and the second rectifier circuit comprises a ninth diode and a tenth diode.

A first end of the first transformer T1 is connected to the elevator safety loop, a third end of the first transformer T1 is connected to a first end of the ninth diode D9, a second end of the ninth diode D9 is connected to a first input end of the safety brake circuit SBC and/or the safety torque off circuit STO, a second end of the first transformer T1 is connected to an equipotential point N, and a fourth end of the first transformer is connected to ground GND.

A first end of the second transformer T2 is connected to the elevator safety loop, a third end of the second transformer T2 is connected to a first end of the tenth diode D10, a second end of the tenth diode D10 is connected to a second input end of the safety brake circuit SBC and/or the safety torque off circuit STO, a second end of the second transformer T2 is connected to the equipotential point N, and a fourth end of the second transformer is connected to ground GND.

It should be noted that in this embodiment, the safety brake circuit SBC or the safety torque off circuit STO include two input ends: a first input end and a second input end. The two input ends can be input with the same low-voltage electrical signal. However, in some special cases, different low-voltage electrical signals may need to be input. In this case, two different transformers are required for voltage conversion. If the first input end and the second input end of the safety brake circuit SBC or safety torque off circuit STO need to be input with the same voltage, they can be input separately after voltage conversion through two identical transformers.

In a specific embodiment, the first transformer T1 can convert the high-voltage electrical signal into a lifting electrical signal to be rectified, and then obtain the first low-voltage electrical signal after being rectified by the ninth diode D9. The first low-voltage electrical signal is input to the safety brake circuit SBC or the safety torque off circuit STO through the first input end. The second transformer T2 can convert the high-voltage electrical signal into another lifting electrical signal to be rectified. After rectification by the tenth diode D10, the second low-voltage electrical signal is obtained and then is input to the safety brake circuit SBC or the safety torque off circuit STO through the second input end. The voltage transformation process of the second transformer T2 and the rectification process of the tenth diode D10 can be referred to the voltage transformation process of the first transformer T1 and the rectification process of the ninth diode D9 respectively, which will not be described again here.

In this embodiment, an elevator controller is provided. In the elevator controller, the high power supply voltage provided by the high-voltage power supply can be converted into the low power supply voltage needed to drive the low-voltage motor through a transformer circuit and a second rectifier circuit when there isn't an external low-voltage power supply. The low power supply voltage is used to drive the low-voltage motor, thereby effectively solving the problem of high elevator failure rate when using a low-voltage motor control circuit.

In order to achieve the above object, the present application also provides an elevator, which includes the above-mentioned elevator controller and an elevator safety loop. The specific structure of the elevator controller refers to the above-mentioned embodiments. Since the elevator adopts all the technical solutions of all the above-mentioned embodiments, it has at least all the functions brought by the technical solutions of the above-mentioned embodiments, and will not be repeated here.

In addition, the elevator safety loop includes a control cabinet emergency stop relay S1, several hall door lock relays S2 and a main board relay S3;

The first end of the control cabinet emergency stop relay S1 is connected to the high-voltage power supply AC, the second end of the control cabinet emergency stop relay S1 is connected to the first end of the hall door lock relay S2 connected in series, the second end of the hall door lock relay S2 connected in series is connected to the first end of the main board relay S3, and the second end S3 of the main board relay is connected to the high-voltage conversion card 20.

It should be noted that the elevator control cabinet is an electrical control device that installs various electronic devices and electrical components in a cabinet-shaped structure with safety protection. The control cabinet emergency stop relay S1 is a relay that controls the connection between the elevator control cabinet and the high-voltage power supply. When a special situation occurs, the control cabinet emergency stop relay S1 can disconnect the connection between the high-voltage power supply and the elevator control cabinet, thereby protecting various electronic devices and electrical components in the elevator control cabinet. The hall door is the door of the elevator installed on each floor. The same elevator has one such hall door on each floor. There are as many hall doors as there are floors. The position of the hall door is fixed on each floor and can't move.

The structure and door lock of the hall door on each floor are the same. The hall door lock and car door lock are automatically opened and closed with the elevator button signal together. The hall door lock relay S2 is configured to control the opening or closing of the hall door. Each hall door corresponds to a hall door relay S2. The specific number of hall door lock relays is determined by the number of hall doors. The elevator main board is a board provided to control the entire operation process of the elevator. For the operation of the elevator up, down, star-sealing, brake and other processes, the main board is needed to provide corresponding electrical signals to control the elevator motor. The main board relay S3 is configured to control the connection between the high-voltage power supply and the elevator main board.

The above are only some embodiments of the present application, and are not intended to limit the scope of the present application. Under the concept of the present application, equivalent structural transformations made according to the description and drawings of the present application, or direct/indirect application in other related technical fields, are included in the scope of the present application.

## Claims

1. An elevator controller, **characterized by** comprising a safety control circuit, a safety brake circuit and/or a safety torque off circuit, wherein:
an input end of the safety control circuit is connected to an elevator safety loop;
an output end of the safety control circuit is connected to an input end of the safety brake circuit and/or an input end of the safety torque off circuit; and
the safety control circuit is configured to convert a high-voltage electrical signal from an elevator safety loop into a power signal or a control signal required by the safety brake circuit and/or the safety torque off circuit.

2. The elevator controller according to claim 1, wherein the safety control circuit comprises a first rectifier circuit and a switch circuit,
the first rectifier circuit is connected to the elevator safety loop and the switch circuit, and the switch circuit is connected to a low-voltage power supply and the safety brake circuit or the safety torque off circuit respectively;
the first rectifier circuit is configured to rectify the high-voltage electrical signal to obtain a rectified electrical signal, and send the rectified electrical signal to the switch circuit; and
the switch circuit is configured to receive the rectified electrical signal and generate a control signal, and control a connection between the low-voltage power supply and the safety brake circuit and/or the safety torque off circuit according to the control signal.

3. The elevator controller according to claim 2, wherein the first rectifier circuit comprises a brake rectifier circuit and a lifting rectifier circuit, and the switch circuit comprises a brake switch circuit and a lifting switch circuit;
the brake rectifier circuit is connected to the elevator safety loop and the brake switch circuit, and the brake switch circuit is connected to the low-voltage power supply and the safety brake circuit respectively;
the lifting rectifier circuit is connected to the elevator safety loop and the lifting switch circuit, and the lifting switch circuit is connected to the low-voltage power supply and the safety torque off circuit respectively;
the brake rectifier circuit is configured to rectify the high-voltage electrical signal to obtain a rectified brake electrical signal, and send the rectified brake electrical signal to the brake switch circuit;
the brake switch circuit is configured to receive the rectified brake electrical signal to generate a brake control signal to control the connection between the low-voltage power supply and the safety brake circuit according to the brake control signal;
the lifting rectifier circuit is configured to rectify the high-voltage electrical signal to obtain a rectified lifting electrical signal, and send the rectified lifting electrical signal to the lifting switch circuit; and
the lifting switch circuit is configured to receive the rectified lifting electrical signal and generate a lifting control signal to control the connection between the low-voltage power supply and the safety torque off circuit according to the lifting control signal.

4. The elevator controller according to claim 2, wherein the high voltage conversion circuit comprises a first resistor, a second resistor, a first diode, a second diode, a third diode, a fourth diode, a first optocoupler and a first transistor;
a first end of the first resistor is connected to the elevator safety loop, and a second end of the first resistor is connected to a first end of the first diode and a second end of the fourth diode respectively; a second end of the first diode is connected to a second end of the second diode and a first end of the first optocoupler; a first end of the second diode is connected to a second end of the third diode and a first end of the second resistor; a first end of the third diode is connected to a first end of the fourth diode and a second end of the first optocoupler respectively; a third end of the first optocoupler is connected to a collector of the first transistor and the low-voltage power supply; a fourth end of the first optocoupler is connected to a base of the first transistor; and an emitter of the first transistor is connected to an input end of the safety brake circuit and/or the safety torque off circuit.

5. The elevator controller according to claim 2, wherein the high voltage conversion circuit comprises a first resistor, a second resistor, a third resistor, a fourth resistor, a first diode, a second diode, a third diode, a fourth diode, a fifth diode, a sixth diode, a seventh diode, an eighth diode, a first optocoupler, a second optocoupler, a first transistor and a second transistor;
a first end of the first resistor is connected to the elevator safety loop, and a second end of the first resistor is respectively connected to a first end of the first diode and a second end of the fourth diode; a second end of the first diode is connected to a second end of the second diode and a first end of the first optocoupler; a first end of the second diode is connected to a second end of the first diode and a first end of the second resistor respectively; a first end of the third diode is connected to a first end of the fourth diode and a second end of the first optocoupler respectively; a third end of the first optocoupler is connected to a collector of the first transistor and the low-voltage power supply; a fourth end of the first optocoupler is connected to a base of the first transistor; an emitter of the first transistor is connected to a first input end of the safety brake circuit or the safety torque off circuit; a first end of the third resistor is connected to the elevator safety loop; a second end of the third resistor is connected to a first end of the fifth diode and a second end of the eighth diode respectively; a second end of the fifth diode is connected to a second end of the sixth diode and a first end of the second optocoupler; a first end of the sixth diode is connected to a second end of the seventh diode and a first end of the fourth resistor; a first end of the seventh diode is connected to a first end of the eighth diode and a second end of the second optocoupler respectively; a third end of the second optocoupler is connected to a collector of the second transistor and the low-voltage power supply; a fourth end of the second optocoupler is connected to a base of the second transistor; and an emitter of the second transistor is connected to a second input end of the safety brake circuit or the safety torque off circuit.

6. The elevator controller according to claim 1, wherein the safety control circuit further comprises a transformer circuit and a second rectifier circuit;
the transformer circuit is connected to the elevator safety loop and the second rectifier circuit, and the second rectifier circuit is connected to the safety brake circuit and/or the safety torque off circuit;
the transformer circuit is configured to convert the high-voltage electrical signal to obtain an electrical signal to be rectified, and send the electrical signal to be rectified to the second rectifier circuit; and
the second rectifier circuit is configured to rectify the electrical signal to be rectified to a low-voltage electrical signal, and send the low-voltage electrical signal to the safety brake circuit and/or the safety torque off circuit.

7. The elevator controller according to claim 6, wherein the voltage transformer circuit comprises a brake transformer circuit and a lifting transformer circuit, and the second rectifier circuit comprises a brake rectifier circuit and a lifting rectifier circuit;
the lifting transformer circuit is connected to the elevator safety loop and the lifting rectifier circuit, the lifting rectifier circuit is connected to the safety torque off circuit, the brake transformer circuit is connected to the elevator safety loop and the brake rectifier circuit, and the brake rectifier circuit is connected to the safety brake circuit;
the lifting transformer circuit is configured to convert the high-voltage electrical signal to obtain a lifting electrical signal to be rectified, and send the lifting electrical signal to be rectified to the lifting rectifier circuit;
the lifting rectifier circuit is configured to rectify the lifting electrical signal to be rectified to obtain a low-voltage lifting electrical signal, and send the low-voltage lifting electrical signal to the safety torque off circuit;
the brake transformer circuit is configured to convert the high-voltage electrical signal to obtain a brake electrical signal to be rectified, and send the brake electrical signal to be rectified to the brake rectifier circuit; and
the brake rectifier circuit is configured to rectify the brake electrical signal to be rectified to obtain a low-voltage brake electrical signal, and send the low-voltage brake electrical signal to the safety brake circuit.

8. The elevator controller according to claim 6, wherein the transformer circuit comprises a first transformer, and the second rectifier circuit comprises a ninth diode; and
a first end of the first transformer is connected to the elevator safety loop, a third end of the first transformer is connected to a first end of the ninth diode, a second end of the ninth diode is connected to a first input end and a second input end of the safety brake circuit and/or the safety torque off circuit, a second end of the first transformer is connected to an equipotential point, and a fourth end of the first transformer is connected to ground.

9. The elevator controller according to claim 6, wherein the transformer circuit comprises a first transformer and a second transformer, and the second rectifier circuit comprises a ninth diode and a tenth diode;
a first end of the first transformer is connected to the elevator safety loop, a third end of the first transformer is connected to a first end of the ninth diode, a second end of the ninth diode is connected to a first input end of the safety brake circuit and/or the safety torque off circuit, a second end of the first transformer is connected to an equipotential point, and a fourth end of the first transformer is connected to ground; and
a first end of the second transformer is connected to the elevator safety loop, a third end of the second transformer is connected to a first end of the tenth diode, a second end of the tenth diode is connected to a second input end of the safety brake circuit and/or the safety torque off circuit, a second end of the second transformer is connected to the equipotential point, and a fourth end of the second transformer is connected to ground.

10. An elevator, **characterized by** comprising an elevator safety loop and the elevator controller according to any one of claims 1 to 9, the elevator safety loop comprises a plurality of switches, an input end of the elevator safety loop is connected to the high-voltage electrical signal, and an output end of the elevator safety loop is connected to the input end of the safety control circuit.
